# EUROPEAN PATENT SPECIFICATION

(11) **EP 2 943 062 B1**
(45) Date of publication and mention of the grant of the patent: **23.08.2017**
(21) Application number: 14705226.0
(22) Date of filing: 10.01.2014
(51) Int. Cl.: A01M 21/02, A01M 21/04

(54) **APPARATUS AND METHOD FOR ERADICATION OF INVASIVE SPECIES OF HOGWEED**
VORRICHTUNG UND VERFAHREN ZUR BESEITIGUNG VON INVASIVEN BÄRENKLAU-SPEZIES
APPAREIL ET PROCÉDÉ D'ÉRADICATION D'ESPÈCES ENVAHISSANTES DE BERCE COMMUNE

(30) Priority: 14.01.2013 PL 40202713
(43) Date of publication of application: 18.11.2015
(73) Proprietor: Pastwa, Jan Czeslaw, 66-431 Santok (PL)
(72) Inventor: Pastwa, Jan Czeslaw, 66-431 Santok (PL)
(74) Representative: Zielinski, Wojciech Leszek
(86) International application number: PCT/PL2014/000002
(87) International publication number: WO 2014/109655

(56) References cited:
- DE-U1- 20 013 005
- US-A- 1 312 246
- US-A- 1 960 819
- US-A- 2 763 222
- US-A- 3 077 166
- US-A- 3 299 842
- US-A1- 2007 134 051

## Description

The present invention relates to an apparatus for eradication of invasive species of hogweed: *Heracleum sosnovskyi,* Giant Hogweed (*H. mantegazzianum*), and/or *H. persicum* and method of their eradication using the apparatus.

The all three hogweed species (Sosnowsky's Hogweed - *Heracleum sosnovskyi,* Giant Hogweed *-Heracleum mantegazzianum,* Persian Hogweed - *Heracleum persicum* are highly invasive plants, alien for the European flora, which displace domestic flora around areas seized by them. Giant and Persian Hogweeds were introduced as botanical curiosity into gardens in the 19^{th} century. The species spread rapidly in Europe and North America. Sosnowsky's Hogweed spread out in Poland, Baltic countries, eastern Germany, Hungary after soviet scientists' recommendations of 50-ties of the previous century proposing that plant for cattle feeding. In the years 60-90 of the previous century the plant was introduced in the State-Owned Farms (PGR). The plant breeding was ceased, however due to extremely high seed production of the plant (it was achieved 2500 kg from 1 ha, which allows to sow 100-200 ha) and due to favourable development conditions the species has started its conquest of new sites. It reaches a considerable size (over 3 m tall) [Wojtkowiak R., Kawalec H., Dubowski A. P.: Heracleum Sosnowskyi Mandel L. Journal of Research and Applications in Agricultural Engineering 2008, Vol. 53(4) pp. 137-142; EPPO data sheet on Invasive Alien Plants: Heracleum mantegazzianum, Heracleum sosnowskyi and Heracleum persicum. Bulletin OEPP/EPPO Bulletin 2009, 39, pp. 489-499]. Sosnowsky's Hogweed is very hard to distinguish from Giant Hogweed by a layman. The Giant Hogweed is bigger (uo to 5 m tall) and it also occurs in Poland. Persian Hogweed is very similar to Giant Hogweed, but probably it does not occur in Poland by now [EPPO data sheet on Invasive Alien Plants: Heracleum mantegazzianum, Heracleum sosnowskyi and Heracleum persicum. Bulletin OEPP/EPPO Bulletin, 2009, 39, pp. 489-499]. Their invasiveness is enough significant problem, that the European Commission funded project *Giant Alient Project,* which resulted, among others, in publishing of The Giant Hogweed Best Practice Manual. Guidelines for the management and control of an invasive weed in Europe issued in 2005. These species stand of indigenous plant species occupying large areas, threatening not only biodiversity, but also humans. Furanocoumarins contained in these plants cause, after ultraviolet radiation exposure, very danger burnings of the human or animal skin, very difficult for treatment [Jakubowicz O., Zaba C., Nowak G., Jarmuda S., Zaba R., Marcinkowski J. T.: Heracleum sosnowskyi Manden. Annals of Agricultural and Environmental Medicine, 2012; 19(2), pp. 327-328]. Now it creates serious problem for national parks (e.g. Ojcowski, Tatrzański, Biebrzański) and for forests both in the view of plant protection and of tourism. Control of invasive hogweed species applies many methods (mechanical and/or chemical) with different efficiency, but destruction of these plants in national parks, nature reserves, protected areas and woods is problematic as plants surrounding hogweed ought to be protected [Wróbel I.: Barszcz Sosnowskiego (Heracleum sosnowskyi MANDEN.) w Pieninach. Pieniny - Przyroda i Czowiek 2008, vol 10, pp. 37-43]. Summarising, the invasive hogweed species produce economical losses. Efficacy of the available herbicides recommended for control of dicotyledons varies as well. Zurek Helena [Zurek Helena: Metoda i technika zwalczania barszczu Sosnowskiego. IMUZ, Falenty 2002, p. 11] stated, that the only effective herbicide is a biocidal product marketed as Roundup 360 SL.

There are known numerous methods for individual plant control. They consist in either mechanical action (e.g. mowing or digging out) or treating a plant with a herbicide on leaves using a brush or spraying it onto a plant. They include also a method described in the Canadian patent application CA2740944A1 an apparatus jetting a water steam onto a plant. From the Russian patent application no. RU 2011101134 there is also known a solution according to which a kind of syringe is used for a herbicide injection into a hogweed stem. Sosnowsky's Hogweed control is a subject of the Russian patents and patent applications (e.g. RU2297141C1, RU2439141C1, RU2008136427A or above-mentioned RU 2011101134). The US patent application no. US20070281857 describes use of formic acid as a herbicide. But it provides neither data on efficacy against hogweed nor description of using water solutions of formic acid into a plant. US patent application US1,960,819 discloses an apparatus suitable for eradicating invasive hogweed species comprising a longitudinal handle, spike, hole saw cutter and coil spring, wherein a spike is fastened stiffly to a longitudinal handle, and around the spike there is a coil spring fixed to the handle, to which there is attached a hole saw cutter at a free end, and the said coil spring with the hole saw cutter is shorter than the spike. The apparatus according to the US1,960,819 does not provide a well-absorbing compressible material allowing to apply herbicide. The said application discloses a method for eradication of invasive species with application of available and effective herbicide directly into a weed and its mechanical destroying. US patent application US2007/134051 discloses an apparatus for eradicating invasive hogweed species comprising a longitudinal handle and compressible well-absorbing material but there is no teaching to use such a material in combination with a spike, hole saw cutter and coil spring.

Unexpectedly, the foregoing problems are solved by the apparatus and method for eradication of invasive species of hogweed according to this invention. The apparatus according to the invention comprises of a longitudinal handle, to which a spike is fastened stiffly, and around the spike there is a coil spring fixed to the handle, to which there is attached a hole saw cutter at a free end; inside the coil spring there is fixed a compressible well-absorbing material, the said coil spring with the hole saw cutter is shorter than the spike. The longitudinal handle can be with a length adjustment to a user's height and with an elbow support. The spike is 5-20 cm long, preferably 15 cm, and diameter of 8-12 mm, it is made of stiff hard material, preferably of steel. The spike has longitudinal or spiral grooves on its whole length. Advantageously the spike is with the end hardened with cemented carbides. The spring is 4-6 cm long and diameter of 2-5 cm. Diameter of the hole saw cutter is equal to diameter of the spring. Advantageously, a sponge is used as well-absorbing material. According to the one of invention embodiment there is a feeding tube attached to the well-absorbing material to provide a herbicide to the material, wherein the tube orifice diameter shall be at size protecting from uncontrolled herbicide flow out. Method for hogweed eradication according to this invention consists in that after locating hogweed, since spring there are sought namely two-year and older plants of 0.5÷1 m height and then such plant(s) is(are) to be pricked vertically with an apparatus according to the invention monitoring that the spike enters 10÷20 cm below soil level into the plant root through a root neck, while during pricking a shoot (stem and petioles) is cut and destroyed with hole saw cutter, and due to spring compression on absorptive material there is applied herbicide, which has been previously added to the material; the herbicide flow down both onto shoot and into root through grooves in the spike. The procedure is to be repeated for 4-5 years on newly come-up plants up to destroying all individual plants in one place, paying attention that a single plant does not seed. The absorptive material is soaked by placing of the end of the apparatus in a vessel containing a herbicide. In an alternative embodiment the absorptive material is soaked with a herbicide via a feeding tube. Before pricking, the plants taller than one meter shall be broken down keeping safety measures. In method according to the invention there is used 5÷65%, preferably 15%, solution of formic acid.

Irreversible destruction of the weed without harming any other plant in surrounding area is advantage of use of an apparatus and method according to the invention. Thus the procedure can be applied in such place like nature reserves, national parks etc. A site can be visited after 24-48 hours to validate procedure correctness. Destroying of one-year plants is quite difficult as hitting into a still small root system is troublesome, and its digging out is troublesome and could be ineffective. All hogweed species has significant capacity to regenerate even from small parts of a plant, while seeds keeps germination ability for 4-5 years. Monitoring of a site for 4-5 years assures that new plants do not grow up. The apparatus according to the invention enables relatively effortless work - adjusting handle length to an operating person height the procedure can be done by grounding on the handle and pricking using own body mass. Simultaneous destruction of anatomical structure of a stem and root with herbicide application at the same time into both parts of a plant results in certainty of plant eradication. Unexpectedly, simultaneous application of formic acid according to the invention efficiently eradicate a plant. One shall not forget to wear proper protection clothes due to the weed properties.

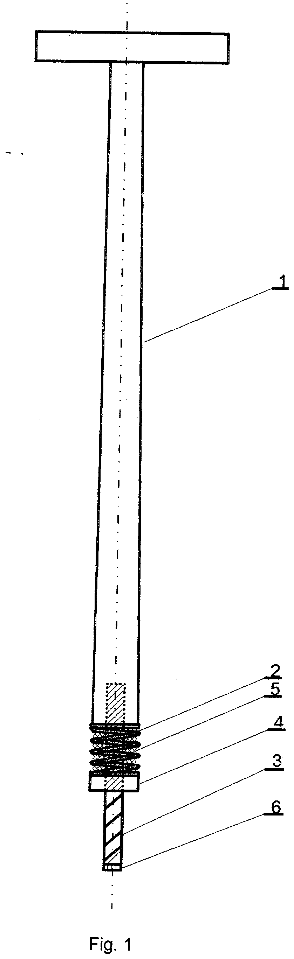

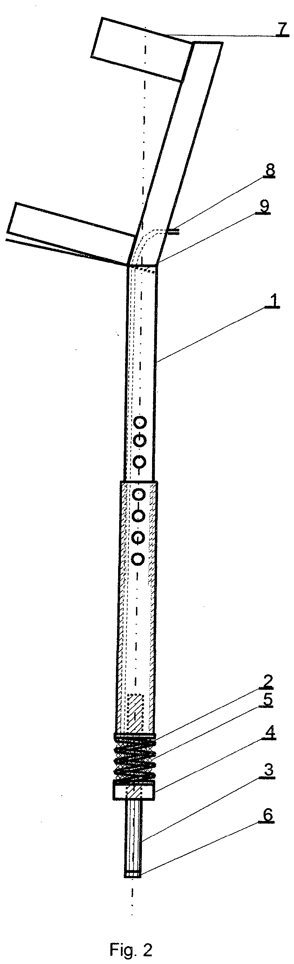

The present invention will now be more particularly described, by way of example only, with reference to the accompanying drawings, in which Figure 1 shows appearance of an apparatus without a feeding tube and an elbow support, and Figure 2 shows appearance of an apparatus with a feeding tube and an elbow support.

### Example 1.

As it is revealed on Figure 1 an apparatus for eradication of hogweed according to the present invention has a longitudinal handle 1, to which a spike 3 is fastened stiffly, and around the spike 3 there is a coil spring 2 fixed to the handle, to which there is attached a hole saw cutter 4 at a free end; inside the coil spring 2 there is fixed a compressible well-absorbing material 5, the said coil spring 2 with the hole saw cutter 4 is shorter than the spike 3. The spike 3 is 5-20 cm long, preferably 15 cm, and diameter of 8-12 mm, it is made of stiff hard material, preferably of steel. The spike 3 has spiral grooves on its whole length. The spike 3 is with the end 6 hardened with cemented carbides. The spring 2 is 4-6 cm long and diameter of 2-5 cm. Diameter of the hole saw cutter 4 is equal to diameter of the spring 2. Advantageously, a sponge is used as well-absorbing material 5.

### Example 2.

An apparatus according to the Example 1, but the grooves of the spike 3 are longitudinal.

### Example 3.

An apparatus according to the Example 1, but a well-absorbing material 5 is soaked with a herbicide via a feeding tube 8.

### Example 4

As it is revealed on Figure 2 an apparatus for eradication of hogweed according to the present invention has a longitudinal handle 1, to which a spike 3 is fastened stiffly, and around the spike 3 there is a coil spring 2 fixed to the handle, to which there is attached a hole saw cutter 4 at a free end; inside the coil spring 2 there is fixed a compressible well-absorbing material 5, the said coil spring 2 with the hole saw cutter 4 is shorter than the spike 3. The spike 3 is 5-20 cm long, preferably 15 cm, and diameter of 8-12 mm, it is made of stiff hard material, preferably of steel. The spike 3 has longitudinal grooves on its whole length. The spike 3 is with the end 6 hardened with cemented carbides. The spring 2 is 4-6 cm long and diameter of 2-5 cm. Diameter of the hole saw cutter 4 is equal to diameter of the spring 2. Advantageously, a sponge is used as well-absorbing material 5. The longitudinal handle 1 has a length adjustment to a user's height and an elbow support 7. A well-absorbing material 5 is soaked with a herbicide via a feeding tube 8.

The elbow support facilitates more precise handling with the apparatus and prevents it from falling out of a hand.

### Example 5

After locating hogweed plants, since spring there are sought namely two-year and older plants of 0.5÷1 m height and then such plant(s) is(are) to be pricked vertically with an apparatus according to the invention monitoring that the spike 3 enters 10÷20 cm below soil level into the plant root through a root neck, while during pricking a shoot (stem and petioles) is cut and destroyed with hole saw cutter 4 and destroyed, and due to spring 2 compression on absorptive material 5 there is applied herbicide, which has been previously added to the material; the herbicide flow down both onto shoot and into root through grooves in the spike 3. The procedure is to be repeated for 4-5 years on newly come-up plants up to destroying all individual plants in one place, paying attention that a single plant does not seed. The absorptive material 5 is soaked by placing of the end of the apparatus in a vessel containing a herbicide or with 5÷65%, preferably 15%, solution of formic acid. Before pricking, the plants taller than one meter shall be broken down keeping safety measures.

### Example 6

After locating hogweed plants, since spring there are sought namely two-year and older plants of 0.5÷1 m height and then such plant(s) is(are) to be pricked vertically with an apparatus according to the invention monitoring that the spike 3 enters 10÷20 cm below soil level into the plant root through a root neck, while during pricking a shoot (stem and petioles) is cut and destroyed with hole saw cutter 4 and destroyed, and due to spring 2 compression on absorptive material 5 there is applied herbicide, which has been previously added to the material; the herbicide flow down both onto shoot and into root through grooves in the spike 3. The procedure is to be repeated for 4-5 years on newly come-up plants up to destroying all individual plants in one place, paying attention that a single plant does not seed. The absorptive material 5 is soaked with a herbicide via a feeding tube 8. Before pricking, the plants taller than one meter shall be broken down keeping safety measures.

The solution according to the invention shall be recommended for eradication of invasive species of hogweed in areas of protected nature, where destruction of other, indigenous plants growing around of hogweed shall be minimised. Using adequate herbicides the safety for domestic flora can be elevated, that is it shall be used herbicides which do cumulate in soil after the weed eradication. Such condition is met by formic acid.

## Claims

1. Apparatus for eradication of invasive species of hogweed consisting of a longitudinal handle (1), a spike (3), a hole saw cutter (4) and a coil spring (2), the said coil spring (2) with the hole saw cutter (4) is shorter than the spike (3), wherein the spike (3) is fastened stiffly to the longitudinal handle (1), and around the spike (3) there is the coil spring (2) fixed to the handle (1), to which there is attached the hole saw cutter (4) at a free end; **characterized in that** inside the coil spring (2) there is fixed a compressible well-absorbing material (5).

2. Apparatus according to the Claim 1 **characterised in that** the longitudinal handle (1) has a length adjustment to a user's height.

3. Apparatus according to the Claim 1 or **2 characterised in that** the longitudinal handle (1) has an elbow support (7).

4. Apparatus according to the Claim 1 **characterised in that** the spike (3) is 5-20 cm long, preferably 15 cm, and diameter of 8-12 mm.

5. Apparatus according to the Claim 1 **characterised in that** the spike (3) is made of stiff hard material, preferably of steel.

6. Apparatus according to the Claim 1 **characterised in that** the spike (3) has longitudinal or spiral grooves on its whole length.

7. Apparatus according to the Claim 1 **characterised in that** the spike (3) has the end (6) hardened with cemented carbides.

8. Apparatus according to the Claim 1 **characterised in that** the spring (2) is 4-6 cm long and diameter of 2-5 cm.

9. Apparatus according to the Claim 1 **characterised in that** diameter of the hole saw cutter (4) is equal to diameter of the spring (2).

10. Apparatus according to the Claim 1 **characterised in that** a sponge is used as the well-absorbing material (5).

11. Apparatus according to the Claim 1 **characterised in that** a feeding tube (8) is attached to the well-absorbing material (5) to provide a herbicide to the material (5), wherein the tube (8) orifice diameter is to protect from uncontrolled herbicide flow out.

12. Apparatus according to the Claim 1 or Claim 11 **characterised in that** the feeding tube (8) has a valve (9) dispensing a herbicide to the well-absorbing material (5).

13. Method for eradication of invasive hogweed species with application of available and effective herbicide directly into a weed and its mechanical destroying **characterised in that** after locating hogweed, since spring there are sought namely two-year and older plants of 0.5÷1 m height and then such plant(s) is(are) pricked vertically with an apparatus according to the Claim 1 monitoring that the spike (3) enters 10÷20 cm below soil level into the plant root through a root neck, while during pricking a shoot (stem and petioles) is cut and destroyed with the hole saw cutter (4), and due to the spring (2) compression on the well-absorbing material (5) there is applied herbicide, which has been previously added to the material (5); the herbicide flows down both onto shoot and into root through grooves in the spike (3); the procedure is repeated for 4-5 years on newly come-up plants up to destroying all individual plants in one place, paying attention that a single plant does not seed.

14. Method according to the Claim 13 **characterised in that** the well-absorbing material (5) of apparatus according to the Claim 1 is soaked by placing of the end of the apparatus in a vessel containing a herbicide before its pricking.

15. Method according to the Claim 13 **characterised in that** the well-absorbing material (5) of apparatus according to the Claim 1 is soaked with a herbicide via the feeding tube (8).

16. Method according to the Claim 13 and 15 **characterised in that** herbicide in the feeding tube (8) is under pressure of 0.3 MPa.

17. Method according to the Claim 13 **characterised in that** before pricking, the plants taller than one meter shall be broken down mechanically keeping safety measures.

18. Method according to the Claim 13 **characterised in that** there is used 5÷65%, preferably 15%, solution of formic acid as herbicide.

## Patentansprüche

1. Gerät zur Beseitigung von invasiven Bärenklauarten, sich zusammengesetzt aus einem Längsgriff (1), einer Spitze(3), einer Lochsäge (4) und einer Schraubenfeder (2), die genannte Schraubenfeder (2) mit der Lochsäge (4) ist kürzer als die Spitze (3), in der die Spitze (3) starr an dem Längsgriff (1) befestigt ist, und um die Spitze (3) herum ist die Schraubfeder (2) an dem Griff (1) fixiert, an dem - an einem freien Ende - die Lochsäge (4) fixiert ist; kennzeichnend ist, dass innerhalb der Schraubfeder (2) ein komprimierbares Material (5) fixiert ist.

2. Gerät laut Anspruch 1 **dadurch gekennzeichnet, dass** der Längsgriff (1) mit einer Längenanpassung bis zur Länge des Benutzers ausgestattet ist.

3. Gerät laut Anspruch 1 bzw. 2 **dadurch gekennzeichnet, dass** der Längsgriff (1) mit einer Ellenbogenstütze ausgestattet ist.

4. Gerät laut Anspruch 1 **dadurch gekennzeichnet, dass** die Spitze (3) 5-20 cm lang, vorzugsweise 15 cm lang ist und einen Durchmesser von 8-12 mm hat.

5. Gerät laut Anspruch 1 **dadurch gekennzeichnet, dass** die Spitze (3) aus hartem, steifem Material, vorzugsweise aus Stahl besteht.

6. Gerät laut Anspruch 1 **dadurch gekennzeichnet, dass** die Spitze (3) auf der ganzen Länge mit longitudinalen bzw. schneckenförmigen Rillen ausgestattet ist.

7. Gerät laut Anspruch 1 **dadurch gekennzeichnet, dass** das Ende (6) der Spitze (3) mit Hartmetallen gehärtet ist.

8. Gerät laut Anspruch 1 **dadurch gekennzeichnet, dass** die Feder (2) 4-6 cm lang ist und einen Durchmesser von 2-5 cm hat.

9. Gerät laut Anspruch 1 **dadurch gekennzeichnet, dass** der Durchmesser der Lochsäge (4) dem der Feder (2) gleich ist.

10. Gerät laut Anspruch 1 **dadurch gekennzeichnet, dass** ein Schwamm als saugfähiges Material (5) benutzt wird.

11. Gerät laut Anspruch 1 **dadurch gekennzeichnet, dass** ein Zufuhrschlauch (8) an dem saugfähigen Material (5) fixiert ist zur Zufuhr eines Herbizids in das Material (5), in dem der Düsendurchmesser des Schlauchs (8) gegen Auslauf des Herbizids schützt.

12. Gerät laut Anspruch 1 **dadurch gekennzeichnet, dass** der Zufuhrschlauch (8) mit einem Ventil (9) ausgestattet ist, das das saugfähige Material (5) mit einem Herbizid versieht.

13. Methode zur Beseitigung von invasiven Bärenklauarten unter Anwendung von verfügbarem und wirksamem Herbizid unmittelbar in das Unkraut bzw. zur mechanischen Beseitigung desselben **dadurch gekennzeichnet, dass,** nachdem der Bärenklau ausfindig gemacht worden ist, nach dem Frühling vor allem zwei Jahre alte bzw. ältere Pflanzen mit einer Höhe von 0,5÷1 m ausgesucht und diese dann senkrecht unter Anwendung eines Geräts laut Anspruch 1 gestochen werden, unter Überwachung, ob die Spitze (3) 10÷20 cm unter dem Boden über eine Wurzelhals in den Pflanzenwurzel eindringt, so dass während des Stechens unter Benutzung der Lochsäge (4) ein Schoss (Stängel und Blattstiele) abgeschnitten wird, und mittels der Komprimierung der Feder (2) auf das saugfähige Material (5) ein Herbizid, das vorher dem Material (5) beigefügt worden ist, aufgetragen wird; das Herbizid läuft über die Rillen der Spitze (3) auf den Schoss sowie in den Wurzel ab; die Prozedur wird während etwa 4-5 Jahre auf neuen Pflanzen wiederholt bis alle individuellen Pflanzen an einem Ort vernichtet werden, darauf achtend dass eine einzige Pflanze kein Saatgut liefert.

14. Methode laut Anspruch 13 **dadurch gekennzeichnet, dass** das saugfähige Material (5) des Geräts laut Anspruch 1 getränkt wird indem das Gerätende vor Beginn des Stechens in ein Gefäß mit Herbizid platziert wird.

15. Methode laut Anspruch 13 **dadurch gekennzeichnet, dass** das saugfähige Material (5) des Geräts laut Anspruch 1 über den Zufuhrschlauch (8) in einem Herbizid getränkt wird.

16. Methode laut Anspruch 13 und 15 **dadurch gekennzeichnet, dass** das Herbizid im Zufuhrschlauch (8) unter einem Druck von 0,3 MPa steht.

17. Methode laut Anspruch 13 und 15 **dadurch gekennzeichnet, dass** die Pflanzen, die höher als ein Meter sind, vor dem Stechen sowie unter Beachtung der Sicherheitsmaßnahmen mechanisch abgebrochen werden.

18. Methode laut Anspruch 13 **dadurch gekennzeichnet, dass** eine Ameisensäurelösung von 5÷65%, vorzugsweise 15% als Herbizid benutzt wird.

## Revendications

1. Appareil pour l'éradication de l'espèce envahissante de la berce constitué d'une poignée longitudinale (1), d'une pointe (3), d'un coupe- scie à trou (4) et d'un ressort hélicoïdal (2), ledit ressort hélicoïdal (2) avec le coupe-scie à trou (4) est plus court que le ressort hélicoïdal (3), dans lequel le la pointe (3) est rigoureusement fixée à la poignée longitudinale (1), et autour de la pointe (3), il y a le ressort hélicoïdal (2) fixé à la poignée (1), auquel est attaché le coupe-scie à trou (4) à une extrémité libre; **Caractérisé en ce que**, à l'intérieur du ressort hélicoïdal (2), est fixé un matériau bien absorbant et compressible (5).

2. Appareil selon la Revendication 1, **caractérisé en ce que** la poignée longitudinale (1) possède un ajustement de longueur à la hauteur de l'utilisateur.

3. Appareil selon la Revendication 1 ou 2, **caractérisé en ce que** la poignée longitudinale (1) possède un support de coude (7).

4. Appareil selon la Revendication 1, **caractérisé en ce que** la pointe (3) a une longueur de 5 à 20 cm, de préférence de 15 cm, et un diamètre de 8 à 12 mm.

5. Appareil selon la Revendication 1, **caractérisé en ce que** la pointe (3) est en matériau dur rigide, de préférence en acier.

6. Appareil selon la Revendication 1, **caractérisé en ce que** la pointe (3) comporte des rainures longitudinales ou en spirale sur toute sa longueur.

7. Appareil selon la Revendication 1, **caractérisé en ce que** la pointe (3) a l'extrémité (6) durcie avec des carbures cémentés.

8. Appareil selon la Revendication 1, **caractérisé en ce que** le ressort (2) a une longueur de 4 à 6 cm et un diamètre de 2 à 5 cm.

9. Appareil selon la Revendication 1, **caractérisé en ce que** le diamètre du coupe-scie à trou (4) est égal au diamètre du ressort (2).

10. Appareil selon la Revendication 1, **caractérisé en ce qu'**une éponge est utilisée comme matériau bien absorbant (5).

11. Appareil selon la Revendication 1, **caractérisé en ce qu'**un tube d'alimentation (8) est fixé au matériau bien absorbant (5) pour fournir un herbicide au matériau (5), dans lequel le diamètre de l'orifice du tube (8) est destiné à protéger d'un écoulement non contrôlé de l'herbicide.

12. Appareil selon la Revendication 1 ou la Revendication 11, **caractérisé en ce que** le tube d'alimentation (8) présente une soupape (9) qui délivre un herbicide au matériau bien absorbant (5).

13. Méthode d'éradication des espèces envahissantes avec l'application d'herbicides disponibles et efficaces directement sur une mauvaise herbe et sa destruction mécanique, **caractérisée en ce que,** après avoir localisé la berce, à partir du printemps, on recherche des plantes de deux ans et plus, de 0,5÷1 m de hauteur et ensuite une (de) telle(s) plante(s) est (sont) piquée (s) verticalement avec un appareil selon la Revendication 1 en surveillant que la pointe (3) entre à 10÷20 cm en dessous du niveau du sol dans la racine de la plante à travers le col de la racine tandis que pendant la piqûre d'une pousse (tige et pétioles) est coupée et détruite avec le coupe-scie à trou (4), et en raison de la compression du ressort (2) sur le matériau absorbant (5), un herbicide, qui a auparavant été ajouté au matériau (5), est appliqué; L'herbicide s'écoule vers le bas à la fois sur la pousse et dans la racine à travers les rainures dans la pointe (3); La procédure est répétée pendant 4 à 5 ans sur les plantes nouvellement apparues jusqu'à la destruction de toutes les plantes individuelles dans un même endroit, en faisant attention à ce qu'aucune plante n'ensemence.

14. Méthode selon la Revendication 13, **caractérisée en ce que** le matériau bien absorbant (5) de l'appareil selon la Revendication 1 est imbibé en plaçant l'extrémité de l'appareil dans un récipient contenant un herbicide avant son piquage.

15. Méthode selon la Revendication 13, **caractérisée en ce que** le matériau bien absorbant (5) de l'appareil selon la Revendication 1 est imbibé avec un herbicide par l'intermédiaire du tube d'alimentation (8).

16. Méthode selon la Revendication 13 et 15, **caractérisée en ce que** l'herbicide dans le tube d'alimentation (8) est sous une pression de 0,3 MPa.

17. Méthode selon la Revendication 13, **caractérisée en ce que,** avant le piquage, les plantes de plus d'un mètre doivent être brisées mécaniquement en gardant les mesures de sécurité.

18. Méthode selon la Revendication 13, **caractérisée en ce que** l'on utilise une solution d'acide formique à 5÷65%, de préférence 15%, comme herbicide.
